# EUROPÄISCHE PATENTSCHRIFT

(11) **EP 3 448 815 B1**
(45) Veröffentlichungstag und Bekanntmachung des Hinweises auf die Patenterteilung: **26.01.2022**
(21) Anmeldenummer: 17724716.0
(22) Anmeldetag: 25.04.2017
(51) Int. Cl.: C02F 1/72, C02F 1/42, C02F 1/66, C02F 101/36, C02F 1/02, C02F 103/36, C01D 3/14

(54) **VERFAHREN ZUR OXIDATION VON KOHLENWASSERSTOFFEN UND DGL. IN WÄSSRIGEN SALZ-LÖSUNGEN**
METHOD FOR OXIDISING HYDROCARBONS AND SIMILAR IN AQUEOUS SALT SOLUTIONS
PROCÉDÉ D'OXYDATION D'HYDROCARBURES ET SIMILAIRES DANS DES SOLUTIONS SALINES AQUEUSES

(30) Priorität: 27.04.2016 AT 2162016
(43) Veröffentlichungstag der Anmeldung: 06.03.2019
(73) Patentinhaber: Kanzler, Walter, 8010 Graz (AT)
(72) Erfinder: Kanzler, Walter, 8010 Graz (AT)
(74) Vertreter: Wildhack & Jellinek
(86) Internationale Anmeldenummer: PCT/AT2017/060106
(87) Internationale Veröffentlichungsnummer: WO 2017/185117

(56) Entgegenhaltungen:
- WO-A1-2008/091578
- WO-A1-2012/167297
- JP-A- 2001 149 961
- US-A- 4 094 780

## Beschreibung

Abwässer in der chemischen Industrie enthalten oft toxische und/oder schwer abzubauende Komponenten, wie insbesondere Kohlenwasserstoffe, halogenierte Kohlenwasserstoffe, Amine, Silikonöle, und andere oxidierbare, insbesondere organische, Stoffe, die eine Ableitung in die Vorfluter, Weiterverwendung oder Rückführung der wässrigen Lösungen verhindern.

Insbesondere bei gleichzeitiger Anwesenheit von Salzfrachten in der wässrigen Lösung ist die Oxidation mit den üblichen Methoden der "Advanced Oxidation"-Prozesse, wie UV-, Peroxid- oder Elektro-Oxidation praktisch nicht geeignet und/oder sehr teuer. Die Oxidation unter überkritischen Bedingungen scheidet meist wegen der Unlöslichkeit der Salze und der enormen Agressivität der Medien unter diesen Bedingungen aus.

Bei Verseifungs-Prozessen, wie z.B. bei der Herstellung von Epichlorhydrin, u.a. fallen mehr oder weniger konzentrierte Kochsalz-Lösungen (Sole) an, deren Einleitung in Vorfluter nicht erlaubt ist, da neben der hohen Salz-Fracht noch Verunreinigungen mit Kohlenwasserstoffen bzw. halogenierten Kohlenwasserstoffen, meist chlorierten Kohlenwasserstoffen enthalten sind. Andererseits sind die Solelösungen oft frei von anderen anorganischen Verunreinigungen als Kochsalz, was sie zu einem interessanten Rohstoff für die Chlor-Alkali-Elektrolyse macht.

Im Falle der Herstellung von Epichlorhydrin entsteht eine Sole, die ca. 25 Gew.% NaCl enthält und mit ca. 1000 - 10000mg/l TOC, verursacht durch Glyzerin, Epichlorhydrin und Dichlorhydrin, belastet ist. Wegen des hohen Salzgehaltes und des AOX-Gehaltes könnte die Sole nur in ca. 20 - 100 fach verdünnter Form in eine konventionelle biologische Kläranlage eingeleitet werden.

Ähnliche Sole-Lösungen entstehen auch bei der Herstellung von Epoxid-Harzen, wobei ebenfalls mit Natronlauge ein Chlor-Atom aus dem Epichlorhydrin abgespalten wird.

Konventionelle Verfahren zur Naßoxidation, wie mit Peroxid, Hypochlorid, UV, Ozon oder Elektrooxidation scheiden wegen Ineffizienz aus. Bei diesen Verfahren wird nämlich, angewendet auf NaCI-Sole, vorzugsweise Chlor-Gas produziert und nur in geringem Maße werden der TOC und AOX abgebaut.

Verfahren zur Druckoxidation, wie sie dem Stand der Technik entsprechen, z.B. DE 102006001955, die mit festen Katalysatoren arbeiten, weisen bei Salzlösungen keinen erforderlichen Umsatz auf, da die Katalysatoren wegen der gebildeten Salzsäure keine vertretbare Lebensdauer erzielen. Auch jene Verfahren, die Wasserstoffperoxid als Oxidationsmittel verwenden, z.B. gemäß EP 0680931, erzielen keine nennenswerten Umsätze in Solelösungen.

Die US 6,139,755 behandelt kommunales Abwasser mit einem Radikal-Starter, einem Katalysator und Sauerstoff bei 80 bis 140 °C, wobei als Katalysator Metallsalze und als Radikal-Starter Wasserstoffperoxid verwendet werden. Es handelt sich dabei offensichtlich um eine Art "Fenton-Reaktion. Bei Sole, also salzhaltigen Lösungen, funktioniert dieses Verfahren jedoch ebenfalls nicht.

Die AT 511 354 beschreibt ein Verfahren, bei dem Eisen (II)-Salze bei höheren Temperaturen ( > 220°C ) mit Sauerstoff auch in Sole TOC und AOX oxidieren können, und zwar insbesondere Glyzerin, Epichlorhydrin und Dichlorhydrin. Allerdings erfolgt die Oxidation nicht vollständig, da die oxidative Wirkung des Katalysators bei Temperaturen, die korrosionsmäßig noch zu beherrschen sind, nur bis zur Essigsäure erfolgt. Die Entfernung der Essigsäure erfolgt bei diesem Verfahren durch einen Adsorptionsprozess.

Bei der Regeneration der Adsorber entsteht jedoch ein Abwasserstrom mit Natriumazetat, der auch noch gereinigt werden muss und wobei zusätzlich noch das am Ende abgetrennte Eisen (III)-Chlorid entsorgt werden muss.

Nur bedingt, weil von der Problematik einer möglichst vollständigen Oxidation der in hochprozentigen Salzlösungen enthaltenen oxidierbaren organischen Verunreinigungen bzw. Komponenten letztlich zu weit entfernt, sind die WO 2008 091578 A1 und die DE 2636609 A1 zu nennen.

Die genannte WO 2008 091578 A1 offenbart ein mit Kupfer als Katalysator arbeitendes Verfahren zur Nass-Oxidation von oxidierbaren Komponenten in dieselben enthaltenden wässrigen Lösungen, wobei dort ausgeführt ist, dass der pH-Wert in der zu behandelnden Lösung entweder auf geringer als etwa 2 oder auf höher als etwa 13 einzustellen ist. Konkret geht aus dieser Schrift, siehe Beispiel 1, allerdings nur ein pH-Wert von über 2, nämlich 2,2 hervor, siehe hierzu auch die Tabelle 1, Seite 17, aus welcher bei diesem über 2 liegenden pH-Wert ein Abbaugrad des TOC von nur 96,4% und ein COD-Abbaugrad von nur 96,5% hervorgeht. Weiters ist dort für Essigsäure ein Abbaugrad von bloß 97,8% genannt.

Alle dort konkret erreichten Abbaugrade liegen wesentlich unter zumindest 99%, welcher Abbaugrad allerdings für einen Einsatz von Lösungen für eine Elektrolyse absolut mindest-notwendig ist. Wesentlich ist weiters darauf hinzuweisen, dass gemäß dieser Schrift, das als Katalysator eingesetzte Kupfer, durch Fällung rückgewonnen wird.

Aus der JP 2001149961 ist ein Verfahren zur Entfernung von organischen Halogenverbindungen, wie Dioxinen und koplanaren PCB, im Abwasser bekannt, gemäß welchem ein Abwasser, das die Halogenverbindungen enthält, bei 20 bis 370 °C nass oxidiert wird, und zwar unter einem Druck, der für die Abfallflüssigkeit erforderlich ist, um sie in Gegenwart eines Oxidationsmittels mit einem Metallion in flüssiger Phase zu halten.

Das Metallion, speziell Kupferion, wird aus dem mit Nassoxidation behandelten Wasser mittels lonentauscher, Adsorption oder Sedimentation abgetrennt und zurückgewonnen.

Die der US 4092780 entsprechende DE 2636609 A1 offenbart auch ein Verfahren zur katalytischen Druckoxidation von Kohlenwasserstoffen in Abwasserströmen mit einem Kupfersalzkatalysator, allerdings unter wesentlich anderen Reaktionsbedingungen, wobei dort eine Rückgewinnung des Kupfers mittels lonentausch neben der Fällungsmethode angeführt ist. Gemäß dieser Schrift ist zwingend der Zusatz von Ammoniak bzw. eines Ammonsalzes zu einer oxidativ zu behandelten Abstromlösung vorgesehen, wobei dort pH-Werte von 6 bis 10 vorgesehen sind.

Die drei zuletzt behandelten Druckschriften haben für das erfindungsgemäß zu lösende Problem der nassoxidativen Behandlung von hohe Salzkonzentration aufweisenden Solelösungen keine Relevanz, es ist dort von solchen nicht die Rede.

Es ist Aufgabe der vorliegenden Erfindung, ein Verfahren zur katalytischen Druckoxidation von Kohlenwasserstoffen, halogenierten Kohlenwasserstoffen und anderen oxidierbaren Stoffen in wässrigen Salzlösungen aus der Herstellung von Epichlorydrin und Epoxidharzen durch Sauerstoff-hältige Gase, vorzugsweise Sauerstoff, zu schaffen.

Im Zuge der einschlägigen Untersuchungen wurde in Anbetracht der bisherigen negativen Erfahrungen mit der Oxidationsbehandlung von hoch salzhaltigen mit organischen Verunreinigungen belasteten Lösungen, siehe oben, durchaus unerwartet gefunden, dass von der obengenannten, für die oxidative Behandlung von Nichtsalzlösungen vorgesehenen WO 2008 091578 A1 ausgehend, ein erfolgreiches Verfahren zur oxidativen Behandlung von wie oben beschriebenen Solen entwickelbar sein müsste.

Demgemäß ist Gegenstand der vorliegenden Erfindung ein Verfahren gemäß Anspruch 1 zur katalytischer Druckoxidation von Kohlenwasserstoffen, halogenierten Kohlenwasserstoffen und anderen oxidierbaren Stoffen in wässrigen Salzlösungen aus der Herstellung von Epichlorydrin und Epoxidharzen, durch sauerstoffhaltige Gase, vorzugsweise Sauerstoff, wobei die Salzlösungen nach Einstellung des pH-Wertes auf < 2 Kupfer II-Salze im Bereich von 100 bis 1000 ppm Kupfer zugegeben werden, die Verunreinigungen in einem Reaktor bei 150 bis 300 °C, vorzugsweise bei 230 bis 260 °C, oxidiert werden und die Kupfer II-Salze nach der Abkühlung und Entspannung der Salzlösungen an einem lonentauscher adsorbiert werden, wobei für die Adsorption der Cu II-Ionen ein zweistufiger lonentauscher eingesetzt wird, in dessen erster Stufe die Hauptmenge der Cu-Ionen bis auf einen Gehalt von wenigen ppm abgeschieden wird, während in der zweiten Stufe die Feinreinigung bis auf < 50 ppb Cu erfolgt, der lonentauscher mit Säure regeneriert wird und die rückgewonnenen Kupfer II-Salze wieder der unbehandelten Salzlösung vor der Oxidation als Katalysator zugegeben werden.

Die gegenständliche Erfindung betrifft also ein Verfahren zur Reinigung von Solelösungen mit hohen Salzgehalten, zwischen 15 und 25 Gew. % NaCl, aus der Herstellung von Epichlorhydrin und Epoxidharzen, die so weit gereinigt werden müssen, dass sie problemlos einer Chlor-Alkali-Elektrolyse zugeführt werden können.

Das bedeutet, dass für die Einleitung in eine Chlor-Alkali-Elektrolyse der TOC-Gehalt kleiner als 5 - 10 ppm sein muss. Bei einem TOC-Gehalt der Rohsole von > 5000 ppm muss die Abbaurate also mindestens 99,9% betragen. Gleichzeitig darf jedoch der Gehalt an Schwermetall-Ionen für die Einleitung in eine wie heute vorgeschriebene Membran-Elektrolyse nicht höher als 100 ppb sein.

Seit langem also bekannt ist, siehe oben, dass die Oxidation von halogenierten Kohlenwasserstoffen und Kohlenwasserstoffen in etwa konzentrierten Solelösungen wesentlich schlechter und/oder nur bei wesentlich schärferen Bedingungen abläuft, als in salzfreien wässrigen Lösungen. Es funktionieren die üblichen Verfahren zur Nassoxidation und die "advanced oxidation Prozesse" für konzentrierte Salzlösungen nicht oder nur mit äußerst schlechtem Wirkungsgrad. So werden auch die oben dargelegten äußerst niedrigen Vorgaben der Konzentration an Störstoffen von keinem der beiden Verfahren gemäß den beiden oben zuletzt genannten Schriften erfüllt, da die Oxidationswirkung der Kupfer-Ionen tatsächlich erst bei pH-Werten unter 2, und vorzugsweise von unter 1,4, zum Tragen kommen in derartigen Salzlösungen.

Konkret arbeiten die WO 2008 091578 A1 und die DE 2636609 A1 bei pH-Werten von über 2.

Wesentliche Erkenntnis der gegenständlichen Erfindung gegenüber diesen Schriften ist daher, dass die Nassoxidation mit Kupfer-Katalysatoren erst bei pH-Werten von < 2, und vorzugsweise von < 1,4, so funktioniert, dass die erforderlichen Kriterien der Reinheit zur Einleitung der oxidativ gereinigten Sole in eine Chlor-Alkali-Elektrolyse erfüllt werden können.

Für die Verfahren gemäß der oben zuletzt genannten WO 2008 091578 A1 sowie der DE 2636609 A1 ist eine Nachreinigung der Abwässer absolut erforderlich, weil bei beiden Verfahren die Abbauraten für TOC zu niedrig sind. Eine Nachreinigung für TOC ist biologisch bei wie erfindungsgemäß eingesetzten Solelösungen praktisch nicht möglich, da die Mikroorganismen bei Salzgehalten im Bereich von ca. 20 Gew.% ihre Tätigkeit weitestgehend einstellen.

Es hat sich bei Autoklaven-Versuchen gezeigt, dass die Oxidations-geschwindigkeit bei Zugabe von Kupfer (II)-Salzen, wie beispielsweise Kupfer (III)-Chlorid, bei Temperaturen unterhalb von 260 °C schon erheblich höher ist als beim an sich bekannten Einsatz von Eisen (Il)-Salzen. Außerdem wurde gefunden, dass ein Umsatz von > 99,9 % bei allen untersuchten Kohlenwasserstoffen erreicht werden kann. Ein weiterer Effekt besteht darin, dass Kupfer (II) in seiner Oxidationsstufe auch nach der erfolgter Nass-Oxidation erhalten bleibt und in dieser Oxidationsstufe an Ionenaustauschern auch wieder bis auf einen Restgehalt von < 50 ppb abgeschieden werden kann, was für eine nachfolgende Chlor-Alkali-Elektrolyse von ausschlaggebender Bedeutung ist. Die Eluierung der Kupfer (II)-Ionen von den Ionenaustauschern kann mit Mineralsäure erfolgen. Die dafür erforderliche Säuremenge beträgt je nach Katalysatorkonzentration z.B. zwischen 1 und 10 kg HCl je m³ behandeltem Abwasser.

Die Ausführung der lonentauscher erfolgt erfindungsgemäß in zwei Stufen, wobei in der ersten Stufe die Hauptmenge der Kupfer-Ionen bis auf einen Gehalt von wenigen ppm abgeschieden wird, während in der zweiten Stufe die Feinreinigung (Polisher) bis auf < 50 ppb erfolgt. Die Ionenaustauscher können bevorzugt paarweise ausgeführt werden, wobei ein Paar jeweils in Beladungsmodus ist und das andere in Regenerationsmodus betrieben wird.

Ein weiterer wesentlicher Vorteil des erfindungsgemäßen Verfahrens besteht darin, dass bei Erhöhung der Katalysatorkonzentration die Oxidationsleistung (Geschwindigkeit und Umsatz) gesteigert werden kann, wohingegen bei Eisen (II)-Salzen die Erhöhung der Katalysatorkonzentration keinen signifikanten Erfolg zeigt.

Im Bereich von 100 - 1000 ppm Kupfer kann die Umsatzrate im gegebenen Beispiel von 99 auf > 99,9 % durch Erhöhung der Katalysator -Konzentration bei gleicher Reaktionstemperatur, z.B. 240°C gesteigert werden.

Für eine Sole aus der Epichlorhydrin-Herstellung sind die optimalen Temperaturverhältnisse 180 -200 °C am Reaktoreintritt und 240°C am Reaktoraustritt. Die Konzentration an Katalysator betrug optimal 600-800 mg/l Kupfer-(II)-chlorid. Bei dieser Konzentration wird zur Eluierung der Kupfer-Ionen 7- 8 gew.% ige Salzsäure eingesetzt und diese Menge kann zur Ansäuerung der Rohsole am Eintritt vollständig verbraucht werden.

Keines der bekannten Verfahren zur Nassoxidation war in der Lage, die Essigsäure in der Sole so vollständig zu oxidieren, dass sich ein Einsatz der durch die Oxidation gereinigten Sole für den Einsatz in einer Chlor-Alkali-Elektrolyse geeignet hat. Durch das erfindungsgemäße Verfahren kann die Konzentration an TOC auf maximal 1 - 2 mg/l und die Konzentration von AOX bis unter die Nachweisgrenze gesenkt werden.

Durch die starke katalytische Wirkung der Kupfer- Ionen ist das Verfahren auf eine Vielzahl von Verunreinigungen oxidierbarer Komponenten in wässrigen salzhaltigen Lösungen anwendbar. Insbesondere aber ist das Verfahren für Salzlösungen (Natriumchlorid) optimal, bei denen die üblichen Oxidationsverfahren als praktisch nicht oder nur sehr beschränkt einsetzbar galten.

Im Rahmen der vorliegenden Erfindung hat es sich als günstig erwiesen, die Regeneration der lonentauscher mit verdünnter Mineralsäure durchzuführen, wobei das dabei erhaltene, die Kupfer (II)-Ionen enthaltende Eluat gleichzeitig zum Ansäuern der zu behandelnden wässrigen Solelösung dient.

Um einen möglichst hohen Kontakt zwischen der der Nassoxidation zuzuführenden Solelösung und dem Sauerstoff zu erreichen, ist es von Vorteil dafür zu sorgen, dass die wässrige Lösung und der Sauerstoff am Boden des vertikalen Reaktors aufgegeben werden und im Gleichstrom von unten nach oben strömen.

Um insbesondere Verluste an Sauerstoff zu vermeiden, wird vorzugsweise darauf geachtet, dass der im Reaktor nicht umgesetzte Sauerstoff am Kopf des Reaktors abgezogen wird und nach Abtrennung des entstandenen Kohlendioxids in einem Wäscher über einen Verdichter wieder gemeinsam mit frisch zugeführtem Sauerstoff in den Reaktor eingespeist wird.

Die erforderliche Reinheit der oxidativ behandelten Sole in Bezug auf Kupfer (II)-Ionen ist von erheblicher Bedeutung. Die vorgeschriebenen < 100 ppb werden gemäß der oben genannten WO 2008 091578 A1 keinesfalls erreicht, da die Löslichkeit von gefälltem Cu++ > 1 ppm beträgt. Aus diesem Grund sind bei der gegenständlichen Erfindung zwei lonentauscher-Paare in Serie eingesetzt, um diese notwendigen, äußerst niedrigen Cu-Konzentrationswerte einzuhalten.

Für die Elution des Kupfers aus dem lonentauscher hat sich als Mineralsäure Salzsäure bewährt.

Weiters hat es sich als günstig gezeigt, wenn die Konzentration von Kupfer (II)-Ionen im Reaktor auf 50 bis 3000 mg/l eingestellt wird (Ausführungsform, die nicht in der vorliegenden Erfindung enthalten ist).

### Beispiel:

1 m³/h Sole aus einer Produktion von Epoxidharzen mit einem Salz-Gehalt von 21 Gew.% ist mit einem TOC von 4000 mg/l belastet. Der TOC ergibt sich je zur Hälfte aus Glyzerin und Epichlorhydrin. Die Sole wird mit 600 mg/l Kupfer (II)-Chlorid versetzt und auf pH 1,4-2 eingestellt. Die Hochdruck-Pumpe (8) erhöht den Druck auf ca. 50 bar und vor dem Gegenstromwärmetauscher (2) werden 5 Nm³/h 98% iger Sauerstoff mit ca. 55 bar zugegeben. Im Wärmetauscher (2) wird die Temperatur der Sole von 40°C auf 200 °C erhöht und im Erhitzer (10) wird mit 40 bar Sattdampf die Temperatur der Sole nur zur Inbetriebnahme durch Sattdampf °C erhöht, während im laufenden Betrieb dann die Anlage autotherm arbeitet. Die erhitzte Sole gelangt nun in den Reaktor (1), wo am Eintritt weitere 15 Nm3/h 98% iger Sauerstoff zugesetzt werden. Der Reaktor (1) hat eine Höhe von 9 Meter und die Verweilzeit beträgt 2,8 Stunden. Durch die Reaktionswärme erhitzt sich die Sole auf 250 °C. Der TOC wird dabei zu 99,9 % umgesetzt und der AOX zu weniger als 99,9 %.

Die behandelte Sole aus dem Reaktor (1) gibt ihre Wärme im Rekuperator (2) an die RohSole ab und wird dabei auf < 90 °C abgekühlt. Die Rest- Gase der Reaktion, also das gebildete CO2 und der Sauerstoffüberschuss, werden am Kopf des Reaktors getrennt von der Flüssigphase abgezogen. Das darin enthaltene Kohlendioxid wird in einem Wäscher (6) mit Wasser als Waschflüssigkeit abgetrennt und entspannt, während der verbliebene Sauerstoff wieder verdichtet (7) und dem Reaktor(1) gemeinsam mit dem neu zuzuführenden Sauerstoff von unten zugeführt wird.

Nach der Entspannung wird der pH-Wert der Sole durch Zugabe von NaOH auf ca. 3 erhöht und gereinigte und Kupfer enthaltende Sole wird über ein Ionenaustauscher-Bett (4) geleitet. Der Ionenaustauscher-Behälter (4) ist mit einem sauren Ionenaustauscher (200I Volumen) gefüllt und kann 14 Stunden lang beladen werden, bis die Konzentration an Kupfer Ionen über 50 ppb ansteigt.

Zur Regeneration des Ionenaustauschers werden 400 L 7 gew.%ige Salzsäure benötigt, die den gesamten Gehalt an adsorbiertem Kupfer Ionen aufnehmen können. Vor und nach der Regeneration wird der Flüssigkeitsinhalt des lonentauscher- Bettes üblicherweise mit Wasser verdrängt. Dieses Wasser wird in Behälter (8) gespeichert und kann z.B. der unbehandelten Sole zugemischt werden.

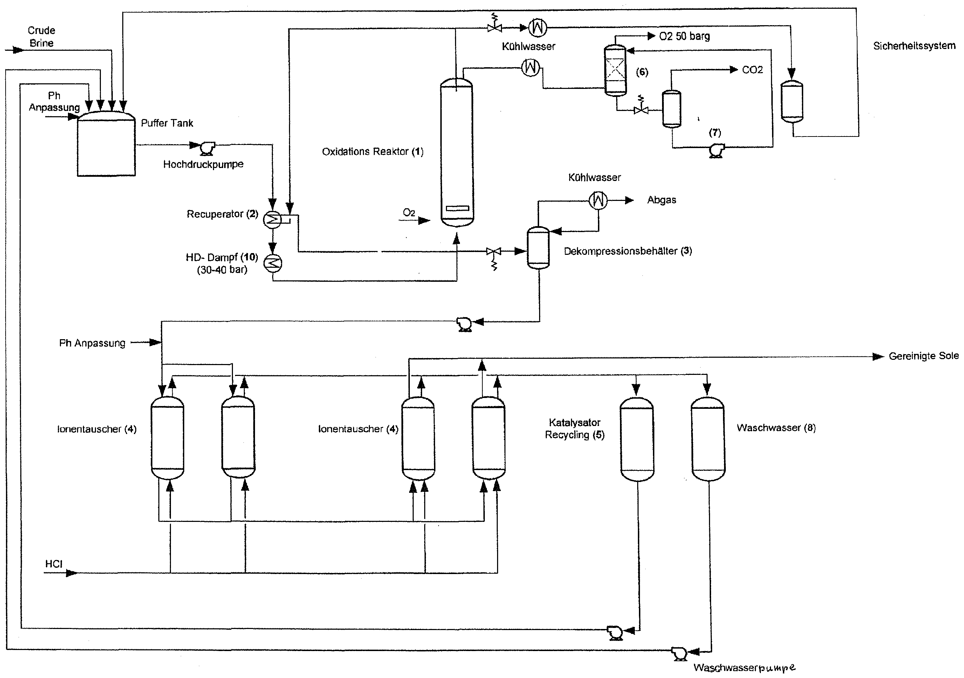

## Patentansprüche

1. Verfahren zur katalytischen Druckoxidation von Kohlenwasserstoffen, halogenierten Kohlenwasserstoffen und anderen oxidierbaren Stoffen in wässrigen Salzlösungen aus der Herstellung von Epichlorydrin und Epoxidharzen, durch sauerstoffhaltige Gase, vorzugsweise Sauerstoff, wobei die Salzlösungen einen Salzgehalt zwischen 15 bis 25 Gew.-% NaCl aufweisen, **dadurch gekennzeichnet, dass** - für den Einsatz derselben als Rohstoff in einer Chlor-Alkali-Elektrolyse - den Salzlösungen nach Einstellung des pH-Wertes auf < 2 Kupfer II-Salze im Bereich von 100 bis 1000 ppm Kupfer zugegeben werden, die Verunreinigungen in einem Reaktor (1) bei 150 bis 300 °C, vorzugsweise bei 230 bis 260 °C, oxidiert werden und die Kupfer II-Salze nach der Abkühlung (2) und Entspannung (3) der Salzlösungen an einem lonentauscher (4) adsorbiert werden, wobei für die Adsorption der Cu II-Ionen ein zweistufiger lonentauscher eingesetzt wird, in dessen erster Stufe die Hauptmenge der Cu-Ionen bis auf einen Gehalt von wenigen ppm abgeschieden wird, während in der zweiten Stufe die Feinreinigung bis auf < 50 ppb Cu erfolgt, der lonentauscher mit Säure regeneriert wird und die rückgewonnenen Kupfer II-Salze wieder der unbehandelten Salzlösungen vor der Oxidation als Katalysator (5) zugegeben werden, wobei durch die Nass-Oxidation eine Salzlösung, in welcher nach Umsetzung des TOC zu 99,9%, insbesondere zu > 99,9, die Konzentration an TOC maximal auf 1 bis 2 mg/l gesenkt ist, erhalten wird.

2. Verfahren nach Anspruch 1, **dadurch gekennzeichnet, dass** die Regeneration der lonentauscher mit verdünnter Mineralsäure durchgeführt wird und das dabei erhaltene, die Kupfer II-Ionen enthaltende Eluat gleichzeitig zum Ansäuern der zu behandelnden wässrigen Salzlösungen dient.

3. Verfahren nach Anspruch 1 oder 2, **dadurch gekennzeichnet, dass** die wässrige Salzlösungen und der Sauerstoff am Boden des Reaktors (1) aufgegeben werden und in demselben im Gleichstrom von unten nach oben strömen.

4. Verfahren nach einem der Ansprüche 1 bis 3, **dadurch gekennzeichnet, dass** der im Reaktor (1) nicht umgesetzte Sauerstoff am Kopf des Reaktors abgezogen wird und nach Abtrennung des entstandenen Kohlendioxids aus demselben in einem Wäscher (6) über einen Verdichter (7) wieder gemeinsam mit frisch zugeführten Sauerstoff in den Reaktor (1) eingespeist wird.

5. Verfahren nach einem der Ansprüche 1 bis 4, **dadurch gekennzeichnet, dass** als Mineralsäure Salzsäure eingesetzt wird.

## Claims

1. Method for catalytic pressure oxidation of hydrocarbons, halogenated hydrocarbons and other oxidisable materials in aqueous salt solutions from the production of epichlorohydrin and epoxy resins, via oxygen-containing gases, preferably oxygen, wherein the salt solutions have a salt content of between 15 and 25 wt.% NaCl, **characterised in that**
- for the use of the same as a raw material in a chlor-alkali electrolysis - copper II salts in the range from 100 to 1000 ppm copper are added to the salt solutions after the pH value is set to < 2, the impurities are oxidised in a reactor (1) at 150-300°C, preferably at 230-260°C, and the copper II salts are adsorbed on an ion exchanger (4) after cooling (2) and expansion (3) of the salt solutions, wherein, for the adsorption of the Cu II ions, a twostage ion exchanger is used in the first stage of which the main quantity of the copper ions is separated off down to a content of a few ppm, whereas fine purification down to < 50 ppb Cu is performed in the second stage, the ion exchanger is regenerated with acid and the recovered copper II salts are added back into the untreated salt solutions before oxidation as catalyst (5), wherein, by means of wet oxidation, a salt solution is obtained in which, after conversion of 99.9%, in particular of > 99.9%, of the TOC, the TOC concentration is reduced to a maximum of 1 to 2 mg/l.

2. Method according to claim 1, **characterised in that** the regeneration of the ion exchangers is performed with diluted mineral acid, and **in that** the obtained eluate containing the copper II ions is simultaneously used to acidify the aqueous salt solutions to be treated.

3. Method according to claim 1 or 2, **characterised in that** the aqueous salt solutions and the oxygen are fed to the base of the reactor (1) and flow in co-current from the bottom to the top.

4. Method according to any of claims 1 to 3, **characterised in that** the oxygen not converted in the reactor (1) is drawn off at the top of the reactor and, after separation of the carbon dioxide formed in a scrubber (6), is fed back into the reactor (1) via a compressor (7) together with freshly supplied oxygen.

5. Method according to any of claims 1 to 4, **characterised in that** hydrochloric acid is used as the mineral acid.

## Revendications

1. Procédé d'oxydation catalytique sous pression d'hydrocarbures, d'hydrocarbures halogénés et d'autres substances pouvant être oxydées dans des solutions salines aqueuses provenant de la préparation d'épichlorhydrine et de résines époxy, au moyen de gaz contenant de l'oxygène, dans lequel les solutions salines présentent une teneur en sel comprise entre 15 et 25 % en poids de NaCl, **caractérisé en ce**
**que** - pour l'utilisation de celles-ci en tant que matière première lors d'une électrolyse chlore-alcali - des sels de cuivre (II) situés dans la plage allant de 100 à 1 000 ppm de cuivre sont ajoutés aux solutions aqueuses après réglage du pH à une valeur < 2, les impuretés sont oxydées dans un réacteur (1) allant de 150 à 300 °C, de préférence de 230 à 260 °C et les sels de cuivre (II) sont adsorbés dans un échangeur d'ions (4) après refroidissement (2) et détente (3) des solutions aqueuses, dans lequel pour l'adsorption des ions de Cu (II) un échangeur d'ions à deux étages est utilisé, dans ledit premier étage la quantité principale des ions Cu est déposée à une teneur de quelques ppm, tandis que dans le second étage l'épuration fine s'effectue à < 50 ppb Cu, l'échangeur d'ions est régénéré et les sels de cuivre (II) récupérés sont à nouveau ajoutés en tant que catalyseur (5) aux solutions salines non traitées avant l'oxydation,
dans lequel par oxydation humide une solution saline est obtenue, dans laquelle après conversion du TOC à 99,9 %, en particulier > 99,9, la concentration en TOC est réduite à un maximum de 1 à 2 mg/l.

2. Procédé selon la revendication 1, **caractérisé en ce que** la régénération de l'échangeur d'ions est réalisée à l'aide d'un acide minéral dilué et **en ce que** et l'éluat ainsi obtenu contenant les ions cuivre II sert simultanément à acidifier les solutions salines aqueuses à traiter.

3. Procédé selon la revendication 1 ou 2, **caractérisé en ce que** les solutions salines aqueuses et l'oxygène sont abandonnés au fond du réacteur (1) et s'écoulent dans celui-ci dans le même sens du bas vers le haut.

4. Procédé selon l'une quelconque des revendications 1 à 3, **caractérisé en ce que** l'oxygène non converti dans le réacteur (1) est extrait au niveau de la tête du réacteur et après séparation du dioxyde de carbone formé à partir de celui-ci, il est réintroduit dans le réacteur (1) conjointement avec de l'oxygène fraîchement fourni dans un épurateur (6) par le biais d'un compresseur (7).

5. Procédé selon l'une quelconque des revendications 1 à 4, **caractérisé en ce que** l'acide chlorhydrique est utilisé en tant qu'acide minéral.
